# EUROPÄISCHE PATENTSCHRIFT

(11) **EP 0 480 360 B1**
(45) Veröffentlichungstag und Bekanntmachung des Hinweises auf die Patenterteilung: **22.03.1995**
(21) Anmeldenummer: 91117097.5
(22) Anmeldetag: 08.10.1991
(51) Int. Cl.: B60Q 1/26

(54) **Warnleuchte für Fahrzeuge**
Warning light for vehicle
Feu avertisseur pour véhicule

(30) Priorität: 12.10.1990 DE 4032438
(43) Veröffentlichungstag der Anmeldung: 15.04.1992
(73) Patentinhaber: Hella KG Hueck & Co., 59552 Lippstadt (DE)
(72) Erfinder: Schreckenberg, Franz-Josef, W-4799 Borchen (DE); Wüstefeld, Michael, W-4600 Dortmund (DE)

(56) Entgegenhaltungen:
- DE-U- 8 902 373
- US-A- 4 839 782

## Beschreibung

Die Erfindung bezieht sich auf eine Warnleuchte für Fahrzeuge mit folgenden Merkmalen:
- -: die Lichtquelle ist in ein Gehäuse eingesetzt, welches aus einer lichtdurchlässigen Lichthaube und einem die Lichthaube tragenden Sockel besteht,
- -: der Sockel ist schalenförmig ausgeführt und aus elastischem Material hergestellt,
- -: an dem äußeren umlaufenden Rand des schalenförmigen Sockels ist die Lichthaube befestigt,
- -: an dem Boden des schalenförmigen Sockels ist zentral ein Trägerelement angeformt, welches hohl und zumindest an seinem freien Ende zylinderförmig ausgeführt ist und durch welches die Warnleuchte auf eine rohrförmige Aufnahme aufsteckbar ist.

Bei einer solchen, aus dem DE-GM 89 02 373 bekannten Warnleuchte, besteht der Übergang von dem zentralen Trägerteil zu dem schalenförmigen Sockel aus einer die Form eines Faltenbalgs aufweisenden Manschette, welche einstückig mit dem Sockel ausgeführt ist. Damit bei einem seitlichen Stoß gegen die Warnleuchte der Sockel, insbesondere seine Manschette, elastisch nachgibt, ist der Sockel aus einem entsprechend weichen, elastischen Kunststoff hergestellt. Bei einem stärkeren Stoß seitlich gegen die Warnleuchte knickt die Manschette geringfügig ein, d. h. in Stoßrichtung verkleinert sich der Querschnitt der Manschette. Diese durch das Knicken der Manschette entstehende Querschnittsveränderung tritt, wenn auch nur geringfügig, an dem äußeren umlaufenden Rand des Sockels auf. Wegen letzterem Grund und weil der Sockel aus einem weichen, elastischen Werkstoff hergestellt ist, könnte bei einem seitlichen Stoß gegen die Warnleuchte die Lichthaube sich aus ihrer Verbindung zum Sockel hin lösen. Damit die Verbindung zwischen der Lichthaube und dem Sockel fester ist, ist der äußere umlaufende Randabschnitt des Sockels durch einen in ihn eingelegten metallischen Ring versteift. Da der metallische Ring bei der Herstellung des Sockels in das Werkzeug des Sockels eingelegt werden muß, ist die Herstellung des Sockels umständlich und zeitaufwendig. Außerdem ist bei einem seitlichen Stoß gegen die Warnleuchte die Schwingungsdämpfung durch die Manschette des Sockels sehr schlecht, da der Abstand vom Schwerpunkt der Leuchte bis zur Manschette relativ groß ist und der Sockel aus einem weichen, elastischen Material hergestellt ist. Ferner können sich beim Fahrbetrieb in Richtung der Mittelachse der Warnleuchte Schwingungen überlagern, ohne durch den Faltenbalg eine ausreichende Dämpfung zu erfahren.

Aufgabe der Erfindung ist es, die im Gattungsbegriff beschriebene Warnleuchte derart zu gestalten, daß der Sockel für Schwingungen in Richtung ihrer Mittelachse weitestgehend starr ist und radial zur Mittelachse stärkeren Stößen elastisch nachgibt. Dabei soll der Sockel aus einem harten, jedoch noch elastischen Werkstoff hergestellt sein, damit der die Lichthaube tragende Randbereich des schalenförmigen Sockels möglichst frei von einer elastischen Verformung bleibt, um eine sichere Verbindung zwischen der Lichthaube und dem Sockel herstellen zu können. Diese Aufgabe wird nach der Erfindung dadurch gelöst, daß in dem Boden des schalenförmigen Sockels oder in dem Übergang vom Trägerteil zum Boden eine umlaufende, zur Lichthaube hin weisende Einstülpung eingebracht ist, die im Querschnitt etwa U-förmig verläuft. Bei einer solchen Lösung kann für den Sockel ein so hartes, elastisches Material gewählt werden, daß bei einem seitlichen Stoß gegen die Warnleuchte ausschließlich der die Einstülpung aufweisende Abschnitt des Bodens des schalenförmigen Sockels elastisch nachgiebig ist. Durch die Einstülpung ist der Sockel besonders gegen seitlich gegen die Lichthaube auftreffende Stöße elastisch nachgiebig. In Richtung der mittleren Achse der Warnleuchte ist die Einstülpung, weil sie zur Lichthaube hin weist, weniger elastisch nachgiebig. Dies ist sehr vorteilhaft, da im Fahrbetrieb nur seitliche Stöße, welche z. B. durch Äste von Bäumen entstehen, größer sind. Außerdem ist bei einer glockenförmigen Lichthaube, auch wenn ein Stoß schräg von oben auf die Lichthaube auftritt, immer noch eine Kraftkomponente quer zur Mittelachse der Warnleuchte gegeben, durch welche der Sockel elastisch nachgibt.

Weiterhin ist es vorteilhaft, wenn die Wandung des Sockels im Bereich seiner Einstülpung dünnwandiger ist und/oder die Länge der Schenkel der U-Form ein Vielfaches der Wandstärke des Sockels im Bereich der Einstülpung ist. Dadurch ist der Sockel im Bereich der Einstülpung elastischer oder kann aus härterem Werkstoff hergestellt sein.

Vorteilhaft ist es weiterhin, wenn die Schenkel der U-Form länger ausgeführt sind als der sie verbindende Steg. Dadurch ist die Schwingungsdämpfung in Richtung der Mittelachse der Warnleuchte besonders gut.

Ein weiterer Vorteil ist es, wenn der die Schenkel verbindende Steg der U-Form zur Lichthaube hin im Bogen eines Halbkreises erhaben verläuft. Dadurch sind die Schenkel auch bei dünnwandiger Ausführung der Einstülpung sehr stabil miteinander verbunden.

Bei einer weiteren vorteilhaften Weiterbildung der Erfindung geht die innere Wandung der Einstülpung in einen sich zu seinem freien Ende hin konisch verjüngenden Wandungsabschnitt über, welcher an seinem freien Ende eine umlaufende Verdickung aufweist, deren Innenseite zylinderförmig verläuft. Hierbei ist es zweckmäßig, wenn die Verdickung selbst oder ein in die Verdickung eingreifendes separates Teil, welches aus starrem Werkstoff hergestellt ist, das Trägerteil ist. Durch ein separates Trägerteil ist der zentrale Abschnitt des Sockels sehr versteift und eine sehr stabile Verbindung der Warnleuchte mit dem Fahrzeug herstellbar.

Weiterhin ist es vorteilhaft, wenn das Trägerteil sich bis zwischen die Einstülpung erstreckt. Dadurch ist eine besonders gute Schwingungsdämpfung der Warnleuchte bei einem Stoß seitlich gegen die Warnleuchte gegeben, da der Abstand des Trägerteils zum Schwerpunkt der Warnleuchte kleiner ist.

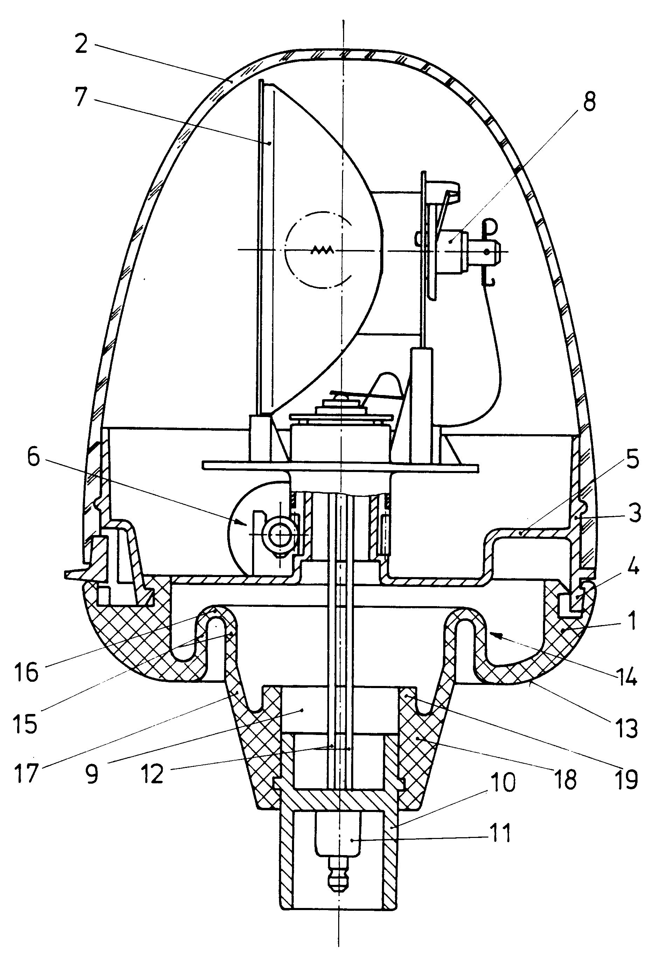

Ein Ausführungsbeispiel der Warnleuchte nach der Erfindung ist in der Zeichnung dargestellt, und zwar zeigt diese einen mittleren vertikalen Längsschnitt durch eine Warnleuchte.

Das Gehäuse der Warnleuchte besteht im wesentlichen aus dem aus elastischem Material hergestellten, schalenförmigen Sockel (1) und der von dem Sockel (1) getragenen, lichtdurchlässigen Lichthaube (2). Die aus starrem Material hergestellte, lichtdurchlässige Lichthaube ist lösbar mit dem aus starrem Material hergestellten, ringförmigen Tragelement (3) verbunden. Hierbei überlappt die Lichthaube (3) mit ihrem äußeren umlaufenden Randabschnitt die am äußeren Rand verlaufende, zylinderförmige Wandung des ringförmigen Tragelements (3) bis auf einen zwischen der Lichthaube und dem Sockel bestehenden umlaufenden Spalt und bis auf den in den äußeren umlaufenden Randabschnitt des schalenförmigen Sockels (1) eingreifenden Randabschnitt (4) des ringförmigen Tragelements (3). Der Randabschnitt (4) greift in eine in den Randabschnitt des schalenförmigen Sockels umlaufend eingebrachte Nut selbstrastend und selbstklemmend ein. Das ringförmige Tragelement ist in einer plattenförmigen Aufnahmevorrichtung (5) quer durchsetzt, welche die elektrische Antriebsvorrichtung (6) und den um die Mittelachse der Warnleuchte drehbar gelagerten Reflektor (7) mit der in ihn eingesetzten Glühlampe (8) trägt.

Der aus elastischem Werkstoff hergestellte Sockel (1) weist zentral die öffnung (9) auf, in welche das aus starrem Material hergestellte, zylinderförmige Trägerelement (10) eingreift. In das Trägerelement ist der elektrische Steckeranschluß (11) eingesetzt, welcher mit den elektrischen Zuleitungen (12) für die Glühlampe (8) verbunden ist. In den Boden (13) des schalenförmigen Sockels (1) ist angrenzend an die öffnung (9) die Einstülpung (14) zur Lichthaube (2) hin eingebracht. Die Einstülpung (14) verläuft in ihrem Querschnitt U-förmig. Die Wandung des Sockels im Bereich der Einstülpung ist dünnwandiger ausgeführt und die Schenkel (15) der U-Form sind wesentlich länger ausgeführt als der sie verbindende Steg (16). Der Steg (16) verläuft zur Lichthaube hin erhaben und ist der Bogen eines Halbkreises. Die innere Wandung der Einstülpung (14) geht in den von dem schalenförmigen Sockel (1) nach außen abstehenden und zum freien Ende hin konisch verjüngenden Wandungsabschnitt (17) über. Der Wandungsabschnitt (17) weist an seinem freien Ende die Verdickung (18) auf. Die Verdickung (18) bildet die zylinderförmige öffnung (9), in welche das Trägerelement (10) eingesetzt ist. Der der Einstülpung (14) benachbarte Randabschnitt der inneren Seitenfläche der öffnung (9) der Verdickung (18) ist von einem zur Lichthaube hin gerichteten, zylinderförmigen Wandungsabschnitt (19) der Verdickung gebildet. Der Wandungsabschnitt (19) und der Wandungsabschnitt (17) bilden eine zur Lichthaube hin geöffnete umlaufende Nut.

Bei einem Stoß seitlich gegen die Warnleuchte werden die Schenkel (15) der Einstülpung an ihrem nach unten weisenden Ende auf der einen Seite der Mittelachse zusammengedrückt und auf der anderen Seite der Mittelachse auseinandergedrückt. Bei einem sehr starken Stoß gegen die Warnleuchte liegen die Schenkel (15) an einer Stelle aneinander und drücken den Wandungsabschnitt (17) an dieser Stelle zur Mittelachse.

## Patentansprüche

1. Warnleuchte für Fahrzeuge mit folgenden Merkmalen:
- die Lichtquelle (8) ist in ein Gehäuse eingesetzt, welches aus einer lichtdurchlässigen Lichthaube (2) und einem die Lichthaube (2) tragenden Sockel (1) besteht,
- der Sockel (1) ist schalenförmig ausgeführt und aus elastischem Material hergestellt,
- an dem äußeren umlaufenden Rand des schalenförmigen Sockels (1) ist die Lichthaube (2) befestigt,
- mit dem Boden (13) des schalenförmigen Sockels (1) ist zentral ein Trägerelement (10) verbunden, welches hohl und zumindest an seinem freien Ende zylinderförmig ausgeführt ist und durch welches die Warnleuchte auf eine rohrförmige Aufnahme aufsteckbar ist,
dadurch gekennzeichnet, daß
- in den Boden (13) des schalenförmigen Sockels (1) oder in den übergang vom Trägerteil (10) zum Boden (13) eine umlaufende, zur Lichthaube (2) hin weisende Einstülpung (14) eingebracht ist, die im Querschnitt etwa U-förmig verläuft.

2. Warnleuchte nach Anspruch 1, dadurch gekennzeichnet, daß die Wandung des Sockels (1) im Bereich seiner Einstülpung (14) dünnwandiger ist.

3. Warnleuchte nach Anspruch 1 oder 2, dadurch gekennzeichnet, daß die Länge der Schenkel (15) der U-Form ein Vielfaches der Wandstärke des Sockels im Bereich der Einstülpung (14) ist.

4. Warnleuchte nach einem der Ansprüche 1 bis 3, dadurch gekennzeichnet, daß die Schenkel (15) in der U-Form länger ausgeführt sind als der sie verbindende Steg (16).

5. Warnleuchte nach einem der Ansprüche 1 bis 4, dadurch gekennzeichnet, daß der die Schenkel (15) verbindende Steg (16) der U-Form zur Lichthaube hin erhaben verläuft.

6. Warnleuchte nach Anspruch 5, dadurch gekennzeichnet, daß der Steg (16) der Bogen eines Halbkreises ist.

7. Warnleuchte nach einem der Ansprüche 1 bis 6, dadurch gekennzeichnet, daß der innere Durchmesser der Einstülpung (14) mindestens dem Innendurchmesser des hohl ausgeführten Trägerteils (10) entspricht.

8. Warnleuchte nach einem der Ansprüche 1 bis 7, dadurch gekennzeichnet, daß die innere Wandung der Einstülpung (14) in einen sich zu ihrem freien Ende hin konisch verjüngenden Wandungsabschnitt (17) übergeht.

9. Warnleuchte nach Anspruch 8, dadurch gekennzeichnet, daß der Wandungsabschnitt (17) an seinem freien Ende eine umlaufende Verdickung (18) aufweist.

10. Warnleuchte nach Anspruch 9, dadurch gekennzeichnet, daß die Innenseite der Verdickung (18) zylinderförmig verläuft.

11. Warnleuchte nach Anspruch 9 oder 10, dadurch gekennzeichnet, daß die Verdickung selbst oder ein in die Verdickung eingreifendes, separates Teil, welches aus starrem Werkstoff hergestellt ist, das Trägerteil (10) ist.

12. Warnleuchte nach einem der Ansprüche 1 bis 11, dadurch gekennzeichnet, daß das Trägerteil (10) und/oder die Verdickung (18) sich bis zwischen den sich konisch verjüngenden Wandungsabschnitt oder die Einstülpung erstreckt.

## Claims

1. A hazard lamp for vehicles, with the following features:
- the light source (8) is inserted in a housing composed of a light-permeable light cover (2) and a base (1) which supports the light cover (2);
- the base (1) is dish-shaped and made of an elastic material;
- the light cover (2) is attached to the outer peripheral edge of the dish-shaped base (1);
- centrally connected to the bottom (13) of the dish-shaped base (1) is a support element (10), which is hollow and at least at its free end cylindrical and through which the hazard lamp is pushed onto a tubular receptacle,
**characterized in that**
- a peripheral bead (14), which is oriented towards the light cover (2) and cross-sectionally approximately U-shaped, is fitted into the bottom (13) of the dish-shaped base (1).

2. A hazard lamp according to claim 1, **characterized in that** the wall of the base (1) is thinner in the area of its beading (14).

3. A hazard lamp according to claim 1 or 2, **characterized in that** the length of the shanks (15) of the U-shape is a multiple of the wall thickness of the base in the area of the beading (14).

4. A hazard lamp according to one of claims 1 to 3, **characterized in that** the shanks (15) in the U-shape are longer than their interconnecting web (16).

5. A hazard lamp according to one of claims 1 to 4, **characterized in that** web (16) of the U-shape which connects the shanks (15) is proud toward the light cover.

6. A hazard lamp according to claim 5, **characterized in that** the web (16) is the arch of a semi-circle.

7. A hazard lamp according to one of claims 1 to 6, **characterized in that** the inner diameter of the beading (14) corresponds at leasts with the inside diameter of the hollow support element (10).

8. A hazard lamp according to one of claims 1 to 7, **characterized in that** the inner wall of the beading (14) merges into a wall section (17) which narrows conically towards its free end.

9. A hazard light according to claim 8**, characterized in that** the wall section (17) has a peripheral thickening (18) at its free end.

10. A hazard lamp according to claim 9, **characterized in that** the inside of the thickening (18) extends cylindrically.

11. A hazard lamp according to claim 9 or 10, **characterized in that** the support element (10) is the thickening itself or a separate section which engages the thickening and which is made of a rigid material.

12. A hazard lamp according to one of claims 1 to 11, **characterized in that** the support element (10) and/or the thickening (18) extends between the conically narrowing wall section or the beading.

## Revendications

1. Lampe d'avertissement pour véhicule, qui présente les éléments suivants :
- la source lumineuse (8) est mise en place dans un boîtier qui est constitué d'un capot (2) transparent à la lumière et d'un socle (1) qui porte le capot (2),
- le socle (1) est réalisé sous la forme d'une coquille, et est produit en un matériau élastique,
- le capot (2) est fixé sur la bordure périphérique extérieure du socle en forme de coquille (1),
- un élément de support (10) est relié au centre avec le fond (13) du socle en forme de coquille (1), cet élément de support étant réalisé de manière creuse et sous forme cylindrique au moins à son extrémité libre, et la lampe d'avertissement pouvant être enfichée grâce à cet élément de support sur un élément récepteur tubulaire,
caractérisée en ce que dans le fond (13) du socle (1) en forme de coquille, ou dans la transition depuis la pièce de support (10) et le fond (13), est ménagé un repli (14) périphérique dirigé vers le capot (2), ce repli ayant en section approximativement la forme d'un U.

2. Lampe selon la revendication 1, caractérisée en ce que la paroi du socle (1) dans la région de son repli (14) est mince.

3. Lampe selon l'une ou l'autre des revendications 1 et 2, caractérisée en ce que la longueur des bras (15) de la forme en U est un multiple de l'épaisseur de paroi du socle dans la région du repli (14).

4. Lampe selon l'une quelconque des revendications 1 à 3, caractérisée en ce que les bras (15) de la forme en U sont réalisés plus longs que le voile (16) qui les relie.

5. Lampe selon l'une quelconque des revendications 1 à 4, caractérisée en ce que le voile (16) de la forme en U qui relie les bras (15) s'étend en étant relevé en direction du capot.

6. Lampe selon la revendication 5, caractérisée en ce que le voile (16) forme un arc en demi-cercle.

7. Lampe selon l'une quelconque des revendications 1 à 6, caractérisée en ce que le diamètre intérieur du repli (14) correspond au moins au diamètre intérieur de la pièce de support (10) réalisée de manière creuse.

8. Lampe selon l'une quelconque des revendications 1 à 7, caractérisée en ce que la paroi intérieure du repli (14) se transforme dans un tronçon de paroi (17) qui va en se rétrécissant de façon conique en direction de son extrémité libre.

9. Lampe selon la revendication 8, caractérisée en ce que le tronçon de paroi (17) comporte un épaississement périphérique (18) à son extrémité libre.

10. Lampe selon la revendication 9, caractérisée en ce que le côté intérieur de l'épaississement (18) est cylindrique.

11. Lampe selon l'une ou l'autre des revendications 9 et 10, caractérisée en ce que l'épaississement lui-même, ou une pièce séparée qui s'engage dans l'épaississement et qui est produite en matériau rigide, est la pièce de support (10).

12. Lampe selon l'une quelconque des revendications 1 à 11, caractérisée en ce que la pièce de support (10) et/ou l'épaississement (18) s'étend jusqu'entre le tronçon de paroi qui va en se rétrécissant de façon conique, ou jusqu'au repli.
